# EUROPÄISCHE PATENTSCHRIFT

(11) **EP 0 928 052 B1**
(45) Veröffentlichungstag und Bekanntmachung des Hinweises auf die Patenterteilung: **03.07.2002**
(21) Anmeldenummer: 98104817.6
(22) Anmeldetag: 17.03.1998
(51) Int. Cl.: H02G 3/12

(54) **Modifizierbare Anschlussdose**
Modifiable connection box
Boîte de connexion modifiable

(30) Priorität: 05.01.1998 DE 29800074 U
(43) Veröffentlichungstag der Anmeldung: 07.07.1999
(73) Patentinhaber: Dauba, Herbert, 82166 Gräfelfing (DE)
(72) Erfinder: Dauba, Herbert, 82166 Gräfelfing (DE)
(74) Vertreter: Neidl-Stippler & Partner

(56) Entgegenhaltungen:
- DE-C- 4 309 299
- GB-A- 2 176 348
- US-A- 4 019 647

## Beschreibung

Die Erfindung betrifft modifizierbare Anschlußdosen für Kabel mit Trageteilen.

Anschlußdosen für Kabel, insbesondere für Datenübertragungskabel sind bekannt, so bspw. als Anschlußdosen für Datennetze, wie bspw. das Telefonnetz, sind lange bekannt und befinden sich bspw. als sog. TAE-Enddosen od. dgl. inzwischen in jedem Haushalt. Typische derartige Dosen sind in der DE-PS 32 39 064, der EP-A2- 0295570 oder der DE-PS 42 34 451 beschrieben.

Es ist notwendig, diese Dosen bzw. deren Gehäuse in der Umgebung - d.h. an der Wand auf Putz od. dgl. oder aber auch versenkt - d.h. in Vertiefungen oder Kabelkanälen durch herkömmliche Verbindungsverfahren zu befestigen, was dazu führt, daß je nach Einsatzort unterschiedlichste Dosen auf dem Markt sind. Es gibt Anschlußdosen für Aufputzinstallation, die keinen Tragring aufweisen. Es sind Anschlußdosen mit Tragring oder Trageteilen, mit umlaufendem Tragring oder aber mit nur zweiseitig angebrachten Trageteilen bekannt, wobei aber Tragring/Trageteile und Dose durch Nieten oder Anspritzen der Trageteile am Gehäuse fest und unlösbar angebunden sind.

Die bekannten Anschlußdosen sind also insofern nachteilig, als für jede Form der Anwendung der Anschlußdose - ob für Einbau in Kabelkanäle oder nicht - stets eine andere Dose/Tragringkombination vorrätig gehalten werden mußte.

Es ist demgegenüber Aufgabe der Erfindung, eine Anschlußdose herzustellen, die einfacher herzustellen ist und sich variabler einsetzen läßt.

Die Aufgabe wird erfindungsgemäß gelöst durch eine modifizierbare Anschlußdose gemäß Anspruch 1.

Die Trageteile weisen einen Gehäusebefestigungsabschnitt mit Verankerungseinrichtungen, einen Verbindungsabschnitt und einen Befestigungsabschnitt zum Anschluß an einem Kabelkanal od dergleichen auf.

Die Trageteile sind im wesentlichen stufenförmig mit einem Gehäusebefestigungsabschnitt mit Verankerungseinrichtungen, einen dazu im wesentlichen senkrecht zum Gehäusebefestigungsabschnitt verlaufenden Verbindungsabschnitt und einem Befestigungsabschnitt zum Anschluß an einem Kabelkanal od. dgl., der im wesentlichen parallel zum Gehäusebefestigungsabschnitt verläuft.

Vorteilhafte Weiterbildungen der Erfindung ergeben sich aus den Unteransprüchen.

Vorteilhafterweise ist mindestens ein Trageteil lösbar vom Gehäuse der Anschlußdose ausgebildet.

Es kann auch sinnvoll sein, daß mindestens ein Trageteil am Gehäuse einstückig ausgebildet ist, wie bspw. durch Anspritzen bei einem Kunststofformverfahren oder andere, dem Fachmann bekannte Befestigungsverfahren.

Dabei können die Anschlußeinrichtungen des Gehäuses angespritzte Kunststoff-Verankerungsteile sein, die mit entsprechenden Verankerungsausnehmungen der Gehäuseanschlußabschnitte der Trageteile zusammenpassen.

Es ist andererseits auch möglich, daß die Anschlußeinrichtungen des Gehäuses Öffnungen sind, in die Verankerungserhebungen der Trageteile eingreifen können.

Es ist also erfindungsgemäß gleichgültig und abhängig vom Einsatzzweck, welcher Art die aufeinander angepaßten Anschlußeinrichtungen von Trageteilen und Gehäuse sind, falls eine gute, bevorzugt lösbare Befestigung aneinander erzielt wird. Vorteilhafterweise sind die Trageteile zumindest teilweise aus Kunststoff oder Metall ausgebildet.
Auch das Gehäuse kann aus verschiedensten Materialien sein - so bspw. Kunststoff, metallisierter Kunststoff, Metall - bspw. Metalldruckguß oder andere geeignete Materialien aufweisen. Das Gehäuse kann selbst abschirmend wirken, es kann aber auch eine spezielle Abschirmschicht vorgesehen sein, falls erwünscht.

Typische Anwendungen des Gehäuses sind Daten-, Elektro- und Antennenanschlußdosen, die in üblicher Weise aktive oder passive elektronische Bauteile, wie Leiterplatten etc. aufweisen können.

Die Verankerung der Trageteile am Gehäuse kann auch über lösbare Schrauben erfolgen, die in Verankerungsausnehmungen des Gehäuses durch Verankerungsausnehmungen der Trageteile eingreifen und so diese zusammenschrauben.

Die Befestigungseinichtungen können bspw. Schrauben, Erhebungen, Stifte, Clipse und Ausnehmungen, wie Schlitze oder Vertiefungen, sein - es kann aber auch jede andere, dem Fachmann geläufige Verbindungsform gewählt werden.

Die Befestigungsschrauben können Rändelschrauben sein - dies hat den Vorteil, daß zu ihrem Einsatz kein Schraubendreher notwendig ist.

Die Anschlußwinkel weisen häufig Befestigungseinrichtungen zur Befestigung am Gehäuseoberteil auf, die bspw. Verankerungserhebungen, die in Verankerungsvertiefungen des Gehäuses einrastbar sind, sein können.

An einer Anschlußdose können bspw. vier Trageteile anschließbar sein.

Die Trageteile können gemeinsam eine ringartige Tragringkonstruktion bilden.

Bevorzugt lassen sich erfindungsgemäße Anschlußdosen zumindest teilweise aus Metall-Druckguß oder Kunststoffspritzguß oder aus Blechstanzteilen ausbilden.

Die Trageteile können gleich oder unterschiedlich sein.

Dadurch, daß durch die erfindungsgemäße Ausgestaltung des Gehäuses sowie die verblüffend einfache Befestigung/Anschluß der verschiedensten Trageteile möglich ist, ist die erfindungsgemäße Dose weitaus variabler gebaut und kann daher mit wenigen, leicht durchzuführenden Modifikationen wenig aufwendig an den verschiedensten Anwendungsorten installiert werden.

Die (nicht gezeigte) Anschlußdose kann bspw. eine handelsübliche RJ45-Anschlußdose sein - der elektrotechnische Inhalt der Dose ist hier aber nebensächlich, da die Erfindung sich hauptsächlich auf die Problematik des mit Trageteilen zu versehenden Gehäuses bezieht.

Dadurch, daß die erfindungsgemäße Dose einfachst zusammenbaubar ist, ist auch ein automatischer Zusammenbau der Dose aus Standardteilen möglich.

Nachfolgend wird die Erfindung anhand der begleitenden Zeichnung einer bevorzugten Ausführungsform der Erfindung näher erläutert, auf die sie aber keineswegs beschränkt ist diese dient nur der Illustration und dem besseren Verständnis. Dabei zeigt:
Fig. 1 eine perspektivische Außenansicht einer erfindungsgemäßen Dose mit vier daran befestigten Trageteilen;
Fig.2 ein einzelnes Trageteil in perspektivischen Darstellung Fig.3 eine andere Ausführungsform der Dose mit zwei angespritzten Trageteilen und Befestigungseinrichtungen für zwei weitere Trageteile; und

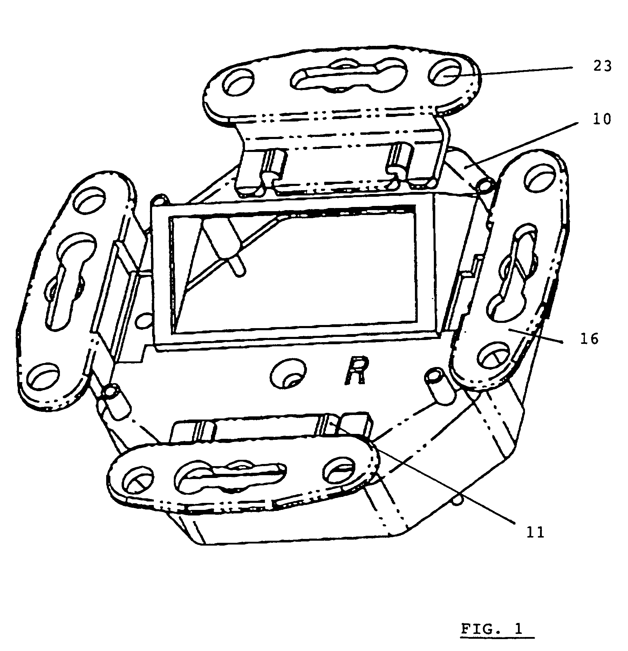

Wie in Fig. 1 gezeigt, besitzt eine erfindungsgemäße Anschlußdose ein Gehäuse 10.

Auf dem Gehäuse 10 sind Anschlußeinrichtungen 11 für Trageteile 16 vorgesehen - hier hakenartige Erhebungen 11, die in entsprechende Ausnehmungen 22 eines Trageteils 16 eingreifen können.

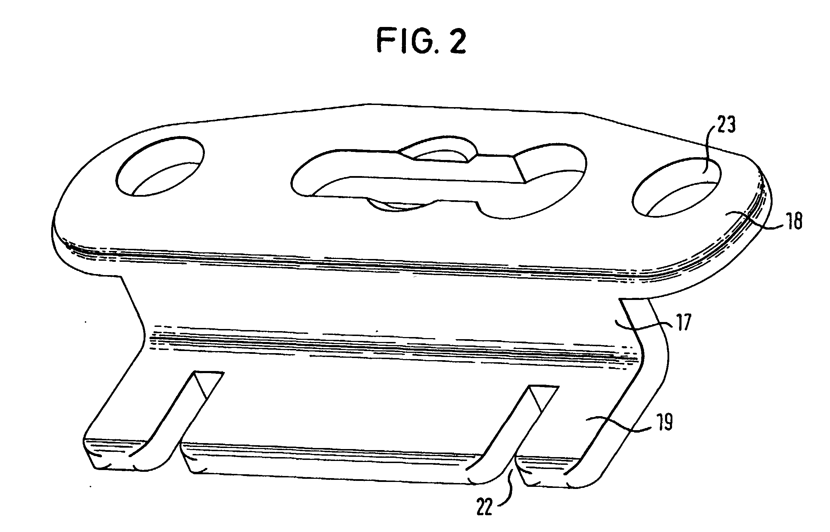

In Fig. 2 ist eine bevorzugte Ausführungsform eines Trageteils 16 gezeigt, die im wesentlichen stufenartig ist. Es besitzt einem Befestigungsabschnitt 18 mit Öffnungen 23 zum Durchgriff von Schrauben od. dgl., mit denen der Tragringbefestigungsabschnitt 18 dann an einem Kabelkanal befestigbar ist. Ferner weist das Trageteil 16 einem Verbindungsabschnitt 17, dessen Aufgabe es ist, die Dose versenkt im Kanal anzuordnen, auf - die Einbautiefe der Dose hängt also von der Länge und dem Winkel dieses Verbindungsabschnittes 17 ab - und einen Gehäuseanschlußabschnitt 19 mit Ausnehmungen 22, in die die Anschlußeinrichtungen 11 eingreifen können.

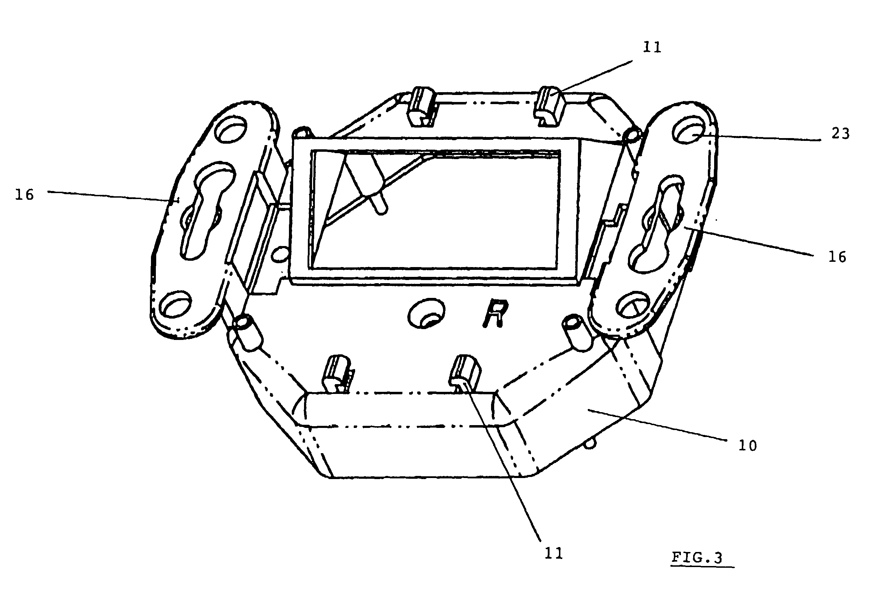

In Fig. 3 ist ein Gehäuse 10 mit zwei Trageteilen 16, an dem zusätzlich zwei weitere Trageteile befestigbar sind, dargestellt. Je nach Anforderung kann hier ein oder zwei Trageteile aufgesteckt werden, um eine allseitige Befestigung des Gehäuses zu ermöglichen.

Die Ausführungsform der Trageteile, wie sie hier gezeigt ist, ist aber keineswegs auf stufenartige Trageteile beschränkt, sie können auch flach oder gewellt und außerdem auch an einer Dose unterschiedlich ausgebildet sein.

## Patentansprüche

1. Modifizierbare Anschlußdose für Kabel mit einem Gehäuse (10), an dem Anschlußeinrichtungen (11) für Trageteile (16) ausgebildet sind, die zumindest teilweise getrennt vom Gehäuse (10) ausgebildet und an diesem befestigt sind, wobei das mindestens eine Trageteil (16) im wesentlichen stufenförmig ist und::
- einen Gehäusebefestigungsabschnitt (19) mit Verankerungseinrichtungen (22),
- einen im wesentlichen senkrecht zum Gehäusebefestigungsabschnitt (19) verlau fenden Verbindungsabschnitt (17) und
- einen im wesentlichen parallel zum Gehäusebefestigungsabschnitt (19) verlaufenden Befestigungsabschnitt (18) zum Anschluß an einem Kabelkanal od. dgl.
aufweist.

2. Anschlußdose nach Anspruch 1, **dadurch gekennzeichnet, daß** mindestens ein Trageteil (16) lösbar vom Gehäuse (10) der Anschlußdose ausgebildet ist.

3. Anschlußdose nach einem der vorangehenden Ansprüche, **dadurch gekennzeichnet, daß** mindestens ein Trageteil (16) am Gehäuse (10) einstückig ausgebildet ist.

4. Anschlußdose nach einem der vorangehenden Ansprüche, **dadurch gekennzeichnet, daß** die Anschlußeinrichtungen (11) des Gehäuses (10) Verankerungserhebungen sind.

5. Anschlußdose nach einem der vorangehenden Ansprüche 1 bis 4, **dadurch gekennzeichnet, daß** die Anschlußeinrichtungen des Gehäuses (10) Ausnehmungen sind.

6. Anschlußdose nach einem der vorangehenden Ansprüche, **dadurch gekennzeichnet, daß** die Trageteile (16) zumindest teilweise aus Kunststoff sind.

7. Anschlußdose nach einem der vorangehenden Ansprüche 1 - 6, **dadurch gekennzeichnet, daß** die Trageteile (16) zumindest teilweise aus Metall sind.

8. Anschlußdose nach einem der vorangehenden Ansprüche, **dadurch gekennzeichnet, daß** die Verankerung der Trageteile (16) am Gehäuse (10) über lösbare Schrauben erfolgt, die in Verankerungsausnehmungen des Gehäuses (10) durch Verankerungsausnehmungen (22) der Trageteile (16) eingreifen.

9. Anschlußdose nach einem der vorangehenden Ansprüche, **dadurch gekennzeichnet, daß** die Befestigungseinrichtungen (11, 22) Schrauben, Erhebungen, Stifte, Clipse und Ausnehmungen oder Vertiefungen sind.

10. Anschlußdose nach einem der vorangehenden Ansprüche, **dadurch gekennzeichnet, daß** die Befestigung der Trageteile (16) am Gehäuse (10) durch Rändelschrauben und entsprechende Vertiefungen im Gehäuse bzw. Öffnungen im Befestigungsabschnitt (18) des Trageteils (16) erfolgt ist.

11. Anschlußdose nach einem der vorangehenden Ansprüche, **dadurch gekennzeichnet, daß** mindestens ein Trageteil (16) Befestigungseinrichtungen (19) zur Befestigung am Gehäuse (10) aufweist.

12. Anschlußdose nach einem der vorangehenden Ansprüche, **dadurch gekennzeichnet, daß** die Gehäuseanschlußabschnitte (19) der Trageteile Verankerungserhebungen, die in Verankerungsvertiefungen des Gehäuses (10) einrastbar sind, aufweisen.

13. Anschlußdose nach einem der vorangehenden Ansprüche, **dadurch gekennzeichnet, daß** vier Trageteile (16) anschließbar sind.

14. Anschlußdose nach einem der vorangehenden Ansprüche, **dadurch gekennzeichnet, daß** die Trageteile (16) gemeinsam eine ringartige Tragringkonstruktion bilden.

15. Anschlußdose nach einem der vorangehenden Ansprüche, **dadurch gekennzeichnet, daß** sie mindestens teilweise aus Metall-Druckguß ausgebildet ist.

16. Anschlußdose nach einem der vorangehenden Ansprüche, **dadurch gekennzeichnet, daß** sie zumindest teilweise aus Blechstanzteilen ausgebildet ist.

17. Anschlußdose nach einem der vorangehenden Ansprüche, **dadurch gekennzeichnet, daß** die Trageteile (16) gleich sind.

18. Anschlußdose nach einem der vorangehenden Ansprüche 1 - 16, **dadurch gekennzeichnet, daß** die Trageteile (16) zumindest teilweise unterschiedlich sind.

## Claims

1. Modifiable connection box for cables, having a housing (10), on which connecting means (11) for supporting members (16) are provided, at least some of which members are separated from the housing (10) and mounted thereon, at least one supporting member (16) being substantially step-like and having:
- a housing mounting portion (19) with securing means (22),
- a connecting portion (17) which extends substantially perpendicularly relative to the housing mounting portion (19), and
- a mounting portion (18), which extends substantially parallel to the housing mounting portion (19), for connection to a cable duct or the like.

2. Connection box according to claim 1, **characterised in that** at least one supporting member (16) is configured to be detachable from the housing (10) of the connection box.

3. Connection box according to one of the preceding claims, **characterised in that** at least one supporting member (16) is provided integrally on the housing (10).

4. Connection box according to one of the preceding claims, **characterised in that** the connecting means (11) of the housing (10) are raised securing means.

5. Connection box according to one of the preceding claims 1 to 4, **characterised in that** the connecting means of the housing (10) are recesses.

6. Connection box according to one of the preceding claims, **characterised in that** at least some of the supporting members (16) are formed from plastics material.

7. Connection box according to one of the preceding claims 1 - 6 , **characterised in that** at least some of the supporting members (16) are formed from metal.

8. Connection box according to one of the preceding claims, **characterised in that** the securement of the supporting members (16) on the housing (10) is achieved via detachable screws, which engage in securement recesses of the housing (10) through securement recesses (22) of the supporting members (16).

9. Connection box according to one of the preceding claims, **characterised in that** the securement means (11, 22) are screws, raised portions, pins, clips and recesses or indentations.

10. Connection box according to one of the preceding claims, **characterised in that** the securement of the supporting members (16) on the housing (10) is achieved by knurled-head screws and corresponding indentations in the housing or respectively openings in the mounting portion (18) of the supporting member (16).

11. Connection box according to one of the preceding claims, **characterised in that** at least one supporting member (16) has mounting means (19) for securement on the housing (10).

12. Connection box according to one of the preceding claims, **characterised in that** the housing connection portions (19) of the supporting members have raised securing means, which are lockable in position in securement indentations of the housing (10).

13. Connection box according to one of the preceding claims, **characterised in that** four supporting members (16) can be connected.

14. Connection box according to one of the preceding claims, **characterised in that** the supporting members (16) together form an annular supporting ring structure.

15. Connection box according to one of the preceding claims, **characterised in that** at least some of it is formed from die-cast metal.

16. Connection box according to one of the preceding claims, **characterised in that** at least some of it is formed from stamped sheet metal component parts.

17. Connection box according to one of the preceding claims, **characterised in that** the supporting members (16) are identical.

18. Connection box according to one of the preceding claims 1 - 16, **characterised in that** at least some of the supporting members (16) are different.

## Revendications

1. Boîte de raccordement modifiable pour des câbles, comportant un boîtier (10), sur lequel sont réalisés des dispositifs de raccordement (11) pour des pièces de support (16), qui sont réalisées au moins de façon partiellement séparée du boîtier (10) et sont fixées à celui-ci, la ou les pièces de support (16) présentant une forme généralement étagée, et présentant :
- un tronçon de fixation au boîtier (19) ayant des dispositifs d'ancrage (22),
- un tronçon de liaison (17) s'étendant généralement perpendiculairement au tronçon de fixation au boîtier (19), et
- un tronçon de fixation (18) s'étendant généralement parallèlement au tronçon de fixation au boîtier (19) pour le raccordement à un canal de câble ou analogue.

2. Boîte de raccordement selon la revendication 1,
**caractérisée en ce qu'**au moins une pièce de support (16) est réalisée de façon amovible du boîtier (10) de la boîte de raccordement.

3. Boîte de raccordement selon une des revendications précédentes,
**caractérisée en ce qu'**au moins une pièce de support (16) est réalisée de façon intégrale sur le boîtier (10).

4. Boîte de raccordement selon une des revendications précédentes,
**caractérisée en ce que** les dispositifs de raccordement (11) du boîtier (10) sont des saillies d'ancrage.

5. Boîte de raccordement selon une des revendications précédentes 1 à 4,
**caractérisée en ce que** les dispositifs de raccordement du boîtier (10) sont des évidements.

6. Boîte de raccordement selon une des revendications précédentes,
**caractérisée en ce que** les pièces de support (16) sont au moins partiellement en matière synthétique.

7. Boîte de raccordement selon une des revendications précédentes 1 à 6,
**caractérisée en ce que** les pièces de support (16) sont au moins partiellement en métal.

8. Boîte de raccordement selon une des revendications précédentes,
**caractérisée en ce que** l'ancrage des pièces de support (16) au boîtier (10) est effectué par l'intermédiaire de vis amovibles qui s'engagent dans des évidements d'ancrage du boîtier (10) à travers des évidements d'ancrage (22) des pièces de support (16).

9. Boîte de raccordement selon une des revendications précédentes,
**caractérisée en ce que** les dispositifs de fixation (11, 22) sont des vis, des saillies, des broches, des clips et des évidements ou des creux.

10. Boîte de raccordement selon une des revendications précédentes,
**caractérisée en ce que** la fixation des pièces de support (16) au boîtier (10) est effectuée par des vis moletées et des évidements correspondants dans le boîtier ou des ouvertures dans le tronçon de fixation (18) de la ' pièce de support (16).

11. Boîte de raccordement selon une des revendications précédentes,
**caractérisée en ce qu'**au moins une pièce de support (16) présente des dispositifs de fixation (19) pour la fixation au boîtier (10).

12. Boîte de raccordement selon une des revendications précédentes,
**caractérisée en ce que** les tronçons de raccordement au boîtier (19) des pièces de support présentent des saillies d'ancrage qui peuvent être encliquetées dans des évidements d'ancrage du boîtier (10).

13. Boîte de raccordement selon une des revendications précédentes,
**caractérisée en ce que** quatre pièces de support (16) peuvent être raccordées.

14. Boîte de raccordement selon une des revendications précédentes,
**caractérisée en ce que** les pièces de support (16) forment en commun une construction de support annulaire.

15. Boîte de raccordement selon une des revendications précédentes,
**caractérisée en ce qu'**elle est réalisée au moins partiellement en métal de coulée sous pression.

16. Boîte de raccordement selon une des revendications précédentes,
**caractérisée en ce qu'**elle est réalisée au moins partiellement en pièces estampées de tôle.

17. Boîte de raccordement selon une des revendications précédentes,
**caractérisée en ce que** les pièces de support (16) sont identiques.

18. Boîte de raccordement selon une des revendications précédentes 1 - 16,
**caractérisée en ce que** les pièces de support (16) sont au moins partiellement différentes.
